(19) Europäisches Patentamt

European Patent Office

Office européen des brevets

(11) **EP 0 816 427 B1**

(12) **FASCICULE DE BREVET EUROPEEN**

(45) Date de publication et mention
de la délivrance du brevet:
**31.10.2001 Bulletin 2001/44**

(51) Int Cl.7: **C08L 23/08**, C08J 5/18
// (C08L23/08, 23:02, 51:06)

(21) Numéro de dépôt: **97201871.7**

(22) Date de dépôt: **19.06.1997**

(54) **Composition à base de polyoléfines et de copolymére éthyléne-acétate de vinyle**

Zusammensetzung auf der Basis von Polyolefin und Kopolymeren von Ethylen-Vinylacetat

Composition based on polyolefins and ethylene/vinylacetate copolymers

(84) Etats contractants désignés:
**BE DE ES FR GB IT PT**

(30) Priorité: **02.07.1996 BE 9600602**

(43) Date de publication de la demande:
**07.01.1998 Bulletin 1998/02**

(73) Titulaire: **SOLVAY (Société Anonyme)**
**1050 Bruxelles (BE)**

(72) Inventeurs:
• **Matz, Pierre**
**1040 Bruxelles (BE)**

• **Mulkens, Edmond**
**1420 Braine-L'Alleud (BE)**

(74) Mandataire: **Dufrasne, Eugène et al**
**Solvay S.A.,**
**Département Propriété Industrielle,**
**310, rue de Ransbeek**
**1120 Bruxelles (BE)**

(56) Documents cités:
**EP-A- 0 004 311       EP-A- 0 013 084**
**EP-A- 0 719 828       WO-A-92/16358**
**DE-A- 3 626 350**

## Description

La présente invention concerne un procédé pour fabriquer des feuilles utilisables dans l'industrie automobile, et en particulier des feuilles de mousse. Elle concerne également les feuilles fabriqués à partir de ces compositions.

Depuis de nombreuses années, le marché de l'habillage intérieur des véhicules automobiles est dominé par l'utilisation de feuilles de PVC, soit en combinaison avec l'ABS pour les tableaux de bord, soit fortement plastifié pour l'habillage des portières et la fabrication des pare-soleil.

Quoique les propriétés de ces matériaux soient intéressantes, il y a néanmoins certains inconvénients à utiliser du PVC dans cette application. Outre ceux liés à l'utilisation de plastifiants, tels que le "fogging" (évaporation de constituants volatils, en particulier des plastifiants, et leur dépôt sur les vitres) ou la fragilisation dans le temps, le PVC n'est pas compatible avec la plupart des autres polymères utilisés dans l'industrie automobile, ce qui nécessite sa séparation des autres pièces automobiles avant son éventuel recyclage.

Il y a donc une demande dans l'industrie automobile pour un matériau nouveau combinant les bonnes propriétés intrinsèques du PVC plastifié (tenue à haute et basse températures, thermoformabilité, soudabilité à haute fréquence, souplesse, ...) avec la possibilité de le recycler aisément, notamment par recyclage thermique direct, ou en le réutilisant avec d'autres polymères utilisés dans l'automobile.

Les compositions proposées devraient non seulement assurer d'excellentes propriétés mécaniques et de stabilité aux produits qui en résultent, mais également être soudables à haute fréquence, en vue d'être utilisables dans l'application envisagée. En outre, il convient que la rhéologie de ces compositions soit telle qu'elle permette un thermoformage - et en particulier un grainage - de qualité.

Différentes compositions à base de polyoléfines, en particulier d'un homopolymère ou d'un copolymère du propylène, de copolymère éthylène-acétate de vinyle et éventuellement de peroxyde servant d'agent de réticulation lors de la mise en oeuvre, ont déjà été proposées.

Le document WO-93/24568 mentionne des compositions permettant d'obtenir, notamment par extrusion, des produits soudables à haute fréquence, pour diverses applications dans le domaine médical, telles que des poches, sacs, tubes et obturations. La composition polymérique mise en oeuvre contient au moins un copolymère éthylène-acétate de vinyle, au moins un polymère du propylène, environ 0,01 % à 5 % en poids d'un agent réticulant et environ 0,1 % à 35 % en poids d'un ou plusieurs autres polymères.

Les feuilles obtenues au départ de ces compositions sont cependant difficilement thermoformables.

Le document EP 013084 décrit une composition à base de propylène et d'un copolymère d'éthylène et d'acétate de vinyle qui convient pour le revêtement de câbles électriques et qui est recyclable. Cette composition est caractérisée par le fait que le propylène est greffé sur l'acétate de vinyle au moyen d'un peroxyde qui est mélangé à l'ensemble de la composition. Ce document ne mentionne pas la fabrication d'articles sous la forme d'une mousse thermoformable à partir d'une telle composition.

Le document DE 3626350 concerne un revêtement pour intérieur de véhicules automobiles qui est thermoformable et qui comprend au moins une couche à base d'un mélange de polyoléfines et d'EPR réticulé et expansé. La réticulation est effectuée sur l'ensemble du mélange soit au moyen d'une irradiation, soit au moyen d'un peroxyde. La morphologie cellulaire d'une telle mousse n'est toutefois pas optimale et il est conseillé de procéder à un post traitement mécanique pour l'améliorer, ainsi que de recouvrir la mousse par un revêtement décoratif, ce qui est toutefois coûteux.

L'invention vise à fournir des feuilles de mousse susceptibles d'être fabriquées a partir de compositions soudables à haute fréquence pouvant notamment se substituer avantageusement au PVC dans les applications de l'habillage intérieur automobile, sans entraîner des coûts prohibitifs.

Ces compositions doivent répondre aux critères habituels de ce secteur d'application, notamment pour ce qui concerne l'aptitude au grainage, la tenue à la chaleur et aux UV, la matité et la résistance au feu, tout en étant recyclables. En particulier, elles doivent être thermoformables, et présenter à cette fin une rhéologie adéquate.

Elles doivent être aptes à la fabrication de feuilles sous la forme de mousses, ce qui exige des propriétés - notamment rhéologiques - très spécifiques. Il a déjà été proposé de fabriquer des mousses à partir de compositions contenant un agent de réticulation. Toutefois, dans un tel cas, un taux de réticulation élevé est généralement nécessaire à l'obtention de propriétés rhéologiques satisfaisantes, ce qui est extrêmement gênant en vue du recyclage : en effet, un taux de réticulation élevé conduit à la formation de gels, ce qui perturbe considérablement le recyclage.

. En outre, lors de la fabrication de mousses réticulées, la réticulation intervient généralement après l'extrusion, ce qui rend cette fabrication plus complexe.

Il est par ailleurs souhaitable de mettre au point un procédé pour la fabrication de feuilles, en particulier de feuilles multicouches du type feuille/mousse, telles qu'on les utilise couramment dans l'habillage intérieur automobile. Un modèle courant de telle feuille multicouche comprend une feuille superficielle à base de polyoléfines thermoplastiques et une mousse à base de PVC plastifié : il est clair que le recyclage de telles feuilles pose de sérieux problèmes, et nécessite dans la plupart des cas des systèmes complexes de séparation des matériaux.

Dès lors, la présente invention concerne un procédé de fabrication d'un article sous la forme d'une mousse à partir d'une composition comprenant, en poids :

- de 40 à 80 % d'au moins une composition non réticulée (A) comprenant au moins une polyoléfine (PA);
- de 60 à 20 % d'au moins une composition réticulée (B) comprenant au moins un polymère du propylène (PB) et au moins un copolymère éthylène-acétate de vinyle (EVA);

dans lequel :

- on fait fondre le mélange des compositions A et B en le maintenant sous pression,
- on y injecte au moins un gaz sous pression,
- on extrude le mélange A/B contenant le gaz, dans des conditions aptes à provoquer l'expansion du mélange extrudé.

En particulier, de bons résultats ont été obtenus en utilisant une composition réticulée (B) comprenant, en poids, au moins 10 %, de préférence au moins 20 %, d'au moins un polymère du propylène (PB), dont la quantité soit d'au plus 49 %, de préférence d'au plus 40 %.

Outre du propylène, le polymère du propylène (PB) peut éventuellement contenir un ou plusieurs autres monomères, de préférence choisis parmi les alpha-oléfines ; il peut aussi bien s'agir d'un homopolymère que d'un copolymère statistique ou à blocs, d'un terpolymère, etc. Avantageusement, le polymère du propylène (PB) comprend au moins 50 % en poids de propylène. De préférence, il contient au moins 75 % en poids de propylène. De manière particulièrement préférée, il s'agit d'un homopolymère du propylène. Son indice de fluidité en fondu (MFI) (230 °C ; 2,16 kg ; mesuré selon la norme ISO 1133 - version de 1991) est avantageusement inférieur à 10 g/10 min, et de préférence inférieur à 4 g/10 min. Par ailleurs, il est avantageusement d'au moins 0,1 g/10 min, de préférence d'au moins 0,4 g/10 min.

On préfère que la composition réticulée (B) ait été préalablement préparée par la mise en oeuvre d'au moins un polymère du propylène (PB), au moins un copolymère EVA, ainsi que de 100 à 1500 ppm en poids d'au moins un agent de réticulation.

Avantageusement, la composition réticulée (B) comprend en outre, en poids, au moins 51 %, de préférence au moins 60 %, d'au moins un copolymère éthylène-acétate de vinyle (EVA), dont la quantité soit d'au plus 90 %, de préférence d'au plus 80 % . Généralement, la teneur pondérale de ce copolymère en acétate de vinyle est d'au moins 12 %, de préférence d'au moins 18 %, tout en étant d'au plus 40 %, de préférence d'au plus 32 %.

Par ailleurs, il est avantageux que la teneur totale de la composition (B) en acétate de vinyle soit d'au moins 12 %, de préférence d'au moins 15 %, et d'au plus 25 %, de préférence d'au plus 22 %, par rapport au poids total du polymère du propylène (PB) et du copolymère EVA.

Une valeur de MFI (190 °C ; 2,16 kg; également mesuré selon la norme ISO 1133) supérieure à 0,5 g/10 min, et tout particulièrement supérieure à 1,5 g/10 min, est préférée pour le copolymère EVA. Cette valeur est avantageusement inférieure à 25 g/10 min, de préférence inférieure à 9 g/10 min.

Selon une variante avantageuse de l'invention, les indices de fluidité en fondu du polymère du propylène ($MFI_{PB}$) et du copolymère EVA ($MFI_{EVA}$) (mesurés dans les conditions respectives susmentionnées et exprimés en g/10 min) répondent à la relation

$$\frac{MFI_{PB}.P_{PB}}{MFI_{EVA}.P_{EVA}} < 1 \ , \qquad \text{et de préférence} \qquad \frac{MFI_{PB}.P_{PB}}{MFI_{EVA}.P_{EVA}} < 0,7$$

dans laquelle $P_{PB}$ et $P_{EVA}$ désignent les proportions pondérales respectives de ces constituants PB et EVA ($P_{PB} + P_{EVA} = 1$).

Pour provoquer la réticulation de la composition (B), lors de sa préparation, on utilise un agent de réticulation dont la quantité est généralement de moins de 1500 ppm (parties en poids par million), de préférence de moins de 900 ppm, de manière particulièrement préférée de moins de 700 ppm. Sa quantité est par ailleurs généralement de plus de 100 ppm, de préférence plus de 200 ppm. Ces quantités très faibles permettent de provoquer une réticulation limitée de la composition B, ce qui est avantageux dans le contexte de la présente invention.

Les teneurs du polymère du propylène (PB), du copolymère EVA et de l'agent de réticulation sont exprimées en poids par rapport à 100 % du polymère du propylène (PB) et du copolymère EVA.

Selon une autre variante avantageuse de l'invention, la composition B comprend, en poids, 10 à 49 % d'au moins un polymère du propylène et 90 à 51 % d'au moins un copolymère éthylène-acétate de vinyle dont la teneur en acétate de vinyle est d'au moins 12 et d'au plus 40 % en poids, et se caractérise à la fois par un rapport $\mu_{0,25} / \mu_{100}$

(ces paramètres désignant la viscosité en cisaillement, mesurée par un rhéogoniomètre, à 170 °C, respectivement à 0,25 s$^{-1}$ et 100 s$^{-1}$) supérieur à 25 et par un rapport $\mu_{maxF}$ / $\mu_{0,2s}$ (ces paramètres désignant respectivement la viscosité élongationnelle pour laquelle la force de traction exercée sur l'échantillon est maximale, et celle mesurée après 0,2 s de traction, chaque fois à 170 °C) supérieur à 5.

De préférence, la température de décomposition ("scorch temperature") de l'agent de réticulation est supérieure à la température de fusion du copolymère EVA. La concentration de l'agent de réticulation est basée sur un pourcentage d'oxygène actif de 10 % en poids ; pour des concentrations différentes, une règle de trois sera appliquée.

L'agent de réticulation est avantageusement essentiellement constitué d'au moins un peroxyde organique, qui est de préférence choisi parmi le 2,5-diméthyl,2,5-di(tert-butylperoxy)hexane (DHBP), le peroxyde de dicumyle (DCUP), le peroxyde de tert-butylcumyle (BCUP), le peroxyde de di-tertbutyle (DTBP), le 2,5-diméthyl,2,5-di(tert-butylperoxy)hexyne-3 (DYBP) ou le 1-3-di(2-tert-butylperoxy-isopropyl)benzène (DIPP).

La quantité d'agent de réticulation indiquée se rapporte à l'hypothèse de son utilisation complète lors de la préparation de la composition réticulée (B) ; dans la plupart des cas, l'agent de réticulation réagit entièrement durant cette préparation, de sorte que la composition (B) en est exempte à l'issue de sa préparation.

Si certains des constituants polymériques de la composition (B) contiennent des additifs diminuant l'effet de l'agent de réticulation, tels que des antioxydants, ou si les conditions opératoires sont telles que cet agent ne peut pas totalement réagir, en particulier lorsque la durée de la préparation de la composition réticulée (B) (par exemple le temps de séjour dans l'extrudeuse, si une extrudeuse est utilisée) est inférieure au temps nécessaire à sa réaction complète, lesdites quantités de l'agent de réticulation devront être adaptées pour que la teneur active d'agent de réticulation soit suffisante. De préférence, on s'abstient d'ajouter des antioxydants aux constituants utilisés.

L'agent de réticulation peut être ajouté en tant que tel au polymère du propylène (PB) et au copolymère EVA, ou leur être mélangé sous la forme d'un mélange-maître constitué de cet agent et d'un porteur compatible. L'agent de réticulation peut être en particulier mis en oeuvre sur un porteur essentiellement constitué de polyéthylène. De préférence, le porteur éventuel de l'agent de réticulation ne représente pas plus de 5 % du poids total du polymère du propylène (PB) et du copolymère EVA.

Avantageusement, la composition réticulée (B) peut être préparée par un procédé d'extrusion réactive de ses constituants. De bons résultats ont été obtenus en évitant d'effectuer un mélange préalable des constituants de la composition de l'invention à l'état fondu (compoundage), c'est-à-dire en procédant à la mise en oeuvre en une seule étape.

Dans les conditions opératoires de l'extrusion réactive pour ce type de compositions, il semblerait - sans que cette interprétation puisse être limitative - que les macroradicaux des deux polymères (EVA - PB) puissent réagir ensemble. Il se formerait alors des copolymères EVA - PB à branchements longs. Ce type de copolymères est idéal pour compatibiliser deux polymères incompatibles. D'autre part, il se formerait des branchements EVA sur d'autres EVA et une dépolymérisation partielle du polymère du propylène (PB).

La formation de branchements longs est très intéressante pour les applications où l'on doit thermoformer l'article obtenu par mise en oeuvre de la composition de l'invention. Ces branchements entraînent une amélioration des propriétés visco-élastiques à bas gradient de vitesse (tenue en fondu et thermoformabilité) sans accroître la viscosité à haut gradient comme l'aurait fait un polymère ou un mélange de polymères à structure linéaire à plus haut poids moléculaire. L'extrudabilité est ainsi assurée. Ces branchements, outre la propriété de haute tenue en fondu ("high melt strength"), apportent du durcissement structural ("strain hardening") dû aux enchevêtrements ("entanglements") formés entre les macromolécules. Cette propriété permet de régulariser l'épaisseur lors du thermoformage d'une feuille. On évite ainsi d'obtenir des zones significativement plus étirées que d'autres.

De préférence, la composition de l'invention comprend au moins 25 % en poids de la composition réticulée (B). Par ailleurs, elle en contient avantageusement au plus 40 %.

La composition non-réticulée (A) comprend de préférence au moins 50 % en poids d'une ou plusieurs polyoléfines (PA). La polyoléfine (PA) est un polymère quelconque comprenant au moins 50 % en poids d'une ou plusieurs oléfines - de préférence de propylène - ainsi qu'éventuellement un ou plusieurs autres comonomères minoritaires. De préférence, la polyoléfine (PA) est de faible viscosité, c'est-à-dire que son indice de fluidité en fondu (mesuré selon la norme ISO 1133 - version 1991) est d'au moins 3 g/10 min (conditions 230 °C ; 2,16 kg). Avantageusement, elle est par ailleurs de faible élasticité.

Si l'on souhaite améliorer la soudabilité à haute fréquence (HF) des articles fabriqués au départ des compositions décrites ci-dessus, il est souhaitable que la composition (A) comprenne au moins un polymère polaire, tel que par exemple un copolymère ou terpolymère de l'éthylène avec un ou plusieurs monomères polaires ; de préférence un copolymère EVA. A cette fin, selon une variante préférée, la composition non-réticulée (A) comprend au moins une polyoléfine (PA) et au moins un copolymère EVA. De manière particulièrement préférée, on utilise de 10 à 49 % en poids de polyoléfine(s) (PA) et de 51 à 90 % en poids de copolymère(s) EVA. Lorsqu'un ou plusieurs copolymères EVA sont utilisés dans la composition (A), il est avantageux que la teneur pondérale de cette composition en acétate de vinyle soit de 12 à 40 % par rapport au poids total de la composition (A). Selon une variante particulièrement préférée, à l'exception d'un ou plusieurs agents de réticulation, la composition (A) comprend les mêmes ingrédients que la composition (B), et ce approximativement dans les mêmes proportions (à 5 % près) ; cette variante est très avantageuse dans la perspective du recyclage des compositions de l'invention. Lorsque la composition non-réticulée (A) comprend au moins une polyoléfine (PA) et au moins un copolymère EVA, on préfère que ces polymères présentent des indices de fluidité tels que définis ci-dessus en relation avec la composition réticulée (B).

Outre les constituants essentiels indiqués ci-dessus, les compositions A et/ou B susmentionnées peuvent encore éventuellement comprendre un ou plusieurs additifs et/ou charges connus, n'entraînant pas un accroissement en poids ou en volume de la formulation de plus de 25 % (par rapport au poids ou au volume de la composition concernée). A titre d'exemples d'additifs, on peut citer les ignifugeants, les anti-UV, les lubrifiants et les pigments. A titre d'exemples de charges, on peut citer le carbonate de calcium, le sulfate de baryum, les fibres de matériaux cellulosiques, les fibres de verre, etc.

La présente invention concerne également les feuilles de mousse fabriqués à partir d'une composition telle que définie ci-dessus.

Ces feuilles présentent toutes les propriétés demandées en vue des applications susmentionnées, en ce compris la souplesse, une thermoformabilité aisée, la soudabilité à haute fréquence la tenue au feu, et d'excellentes propriétés à haute et basse températures. Ces feuilles sont facilement recyclables, car les polymères utilisés présentent une bonne compatibilité avec les autres polymères généralement utilisés dans l'industrie automobile.

Les feuilles se présentent sous la forme d'une mousse, en particulier d'une mousse présentant une densité comprise entre 0,05 et 0,5. Par "feuille", on entend désigner un article d'une épaisseur substantiellement constante et faible par rapport à ses autres dimensions (épaisseur généralement de l'ordre de grandeur du millimètre). Pour fabriquer ces feuilles de mousse, il est commode d'utiliser une extrudeuse munie d'une filière plate. De telles feuilles peuvent avantageusement être colaminées avec une ou plusieurs autres feuilles quelconques, que ce soit en ligne après leur extrusion, ou ultérieurement à leur production.

Pour fabriquer une mousse selon le procédé de l'invention, on injecte au moins un gaz sous pression tel que l'azote, le $CO_2$, des alcanes (propane, butane, pentane, ...), ou certains gaz fluorés (HCFC, HFC, etc.) dans la composition à l'état fondu et maintenue sous pression, pendant sa mise en oeuvre (par exemple dans l'extrudeuse). On peut en particulier lui incorporer, avant ou pendant sa mise en oeuvre, un ou plusieurs agents d'expansion tels que l'azodicarbonamide ou l'un de ses dérivés, l'OBSH, le TSS, le bicarbonate de soude, l'acide citrique, etc., de préférence en des quantités de 1 à 20 % en poids par rapport à la quantité des polymères. On peut également lui incorporer, avant ou pendant sa mise en oeuvre, un ou plusieurs agents nucléants tels que le carbonate de calcium ou le talc, de préférence en des quantités de 0,1 à 10 % en poids par rapport à la quantité des polymères.

Les mousses fabriquées par le procédé de l'invention peuvent avantageusement être utilisées pour fabriquer des articles multicouches comprenant une couche d'une telle mousse et une feuille superficielle. De préférence, cette feuille superficielle est fabriquée de la même façon que les compositions réticulées (B) sont préparées ; de manière particulièrement préférée, la feuille superficielle comprend les mêmes ingrédients que la composition (B) de la mousse. Il est avantageux que ces ingrédients soient approximativement présents dans les mêmes proportions (à 5 % près) que dans la composition B ; cette variante est extrêmement avantageuse dans la perspective du recyclage de ces articles multicouches.

L'un des avantages de l'invention est que le procédé qui en font l'objet est à la fois aptes à la fabrication de mousses et de feuilles, ainsi que par conséquent d'articles multicouches comprenant de telles mousses et de telles feuilles. Ces articles peuvent être recyclés très aisément en raison de la grande similitude chimique de leurs différents constituants (feuille superficielle, composition (A) de la mousse, composition (B) de la mousse) ainsi que du taux de réticulation généralement limité des constituants réticulés.

Le procédé de l'invention peut notamment être utilisé pour fabriquer des feuilles pour l'habillage intérieur de véhicules terrestres, maritimes ou aériens, par exemple pour l'habillage de tableaux de bord, de portières, de parois intérieures, etc.

En ce qui concerne la préparation de la composition de l'invention décrite ci-dessus, on notera que les éventuels différents constituants de la composition A ne doivent pas forcément avoir été préalablement fondus et mélangés, par exemple au moyen d'une extrudeuse, puis resolidifiés; on peut parfaitement mélanger les différents constituants de la composition A avec la composition réticulée B préparée préalablement, avant de faire fondre le tout et de le transformer en un article fini tel que par exemple une feuille.

Contrairement aux procédés classiques de fabrication de mousses partiellement réticulées, aucune réticulation - en particulier aucune étape d'extrusion réactive - n'intervient ici (la réticulation a eu lieu préalablement, lors de la préparation de la composition réticulée (B)), ce qui est avantageux sur le plan industriel.

Les conditions d'extrusion sont de préférence les suivantes : on ajuste les températures des différentes sections de l'extrudeuse selon un profil en cloche, avec une température maximale approximativement à l'endroit d'injection du gaz. On peut notamment utiliser une extrudeuse munie d'une filière plate. On peut encore utiliser une filière circulaire multicouche, la ou les couches extérieures étant dans ce cas exemptes d'agent d'expansion ; il suffit alors de fendre le tube obtenu pour le transformer en une feuille.

EXEMPLES

Les exemples suivants illustrent, de façon non limitative, l'invention et ses avantages. L'exemple 1 est conforme à l'invention et l'exemple 2R est donné à titre de comparaison.
Toutes les proportions sont pondérales.

Exemple 1

On malaxe au moyen d'une extrudeuse à double vis CLEXTRAL® BC 21 un mélange de :

- 70 % d'EVA de type ESCORENE® UL00328 sous forme de granules,
- 30 % de PP ELTEX® P RF110 de SOLVAY sous forme de fluff, et
- comme agent réticulant, 1 pcr (c'est-à-dire 1 % par rapport au poids total de l'EVA et du PP) d'un mélange-maître comprenant 500 ppm de DHBP adsorbé sur du fluff de polyéthylène.

Une filière à trous disposée à la sortie de l'extrudeuse (température de la filière ≈ 220°C) permet la formation de joncs, qui sont découpés pour fournir des granules.
L'extrudeuse tourne à 300 tr/min et le débit total est de 10 kg/h. Le temps moyen de séjour dans l'extrudeuse est évalué à environ 25 s.
Ces granules de composition réticulée (B) sont mélangés aux ingrédients suivants (formant la composition A) :

- 70 % du même EVA que ci-dessus,
- 30 % du PP HIFAX® CA10A, et
- 2 pcr d'un mélange-maître constitué de 90 % de polypropylène et de 10 % de talc.

Le rapport pondéral de mélange A:B était de 70:30.
Le mélange ainsi obtenu est introduit dans une autre extrudeuse, où il est fondu et homogénéisé. On injecte en outre de l'azote sous pression dans le mélange A/B fondu, sans réchauffage préalable et sous un débit ajusté en fonction de la densité souhaitée de la mousse : le gaz se dissout dans ce mélange, dont la température est abaissée de façon homogène vers la sortie de l'extrudeuse (à partir de la trémie d'alimentation, le profil de températures de l'extrudeuse croît d'abord de 170 à 220 °C, pour revenir à 170 °C au niveau de la filière).
La matière plastique est alors extrudée sous la forme d'une feuille dans une filière annulaire dont la géométrie et le conditionnement en température sont judicieusement choisies (sa géométrie étant notamment apte à provoquer une perte de charge maximale à proximité de la sortie de la filière, et le conditionnement thermique étant très précis et uniforme) selon les propriétés désirées de la mousse (notamment son aspect superficiel) La feuille ainsi extrudée s'expanse dès la sortie de la filière.
On a ainsi produit des mousses présentant une densité de 0,2 à 0,5 et une souplesse inférieure à 35D Shore.

Exemple comparatif 2R - Absence de composition réticulée

Si l'on répète l'exemple ci-dessus en l'absence de composition réticulée (B), on n'arrive pas à obtenir des feuilles de mousse de densité faible et de structure homogène (c'est-à-dire présentant des cellules de tailles similaires). L'aspect superficiel et les propriétés (notamment l'étirabilité) de ces feuilles de mousse les rendent inutilisables en particulier dans l'industrie automobile.

**Revendications**

**1.** Procédé de fabrication d'un article sous la forme d'une mousse à partir d'une composition comprenant, en poids:

- de 40 à 80 % d'au moins une composition non réticulée (A) comprenant au moins une polyoléfine (PA);
- de 60 à 20 % d'au moins une composition réticulée (B) comprenant au moins un polymère du propylène (PB) et au moins un copolymère éthèlène-acétate de vinyle (EVA);

  et dans lequel :

- on fait fondre le mélange des compositions A et B en le maintenant sous pression,
- on y injecte au moins un gaz sous pression,
- on extrude le mélange A/B contenant le gaz, dans des conditions aptes à provoquer l'expansion du mélange extrudé

2. Procédé selon la revendication 1, dans laquelle la composition réticulée (B) comprend (en poids) de 10 à 49 % d'au moins un polymère du propylène et de 90 à 51 % en poids d'au moins un copolymère éthylène-acétate de vinyle.

3. Procédé selon l'une des revendications précédentes, dans laquelle le polymère du propylène (PB) utilisé dans la composition réticulée (B) présente un indice de fluidité en fondu (MFI) inférieur à 4 g/10 min (230 °C ; 2,16 kg ; mesuré selon la norme ISO 1133 - version de 1991).

4. Procédé selon l'une des revendications précédentes, dans laquelle la composition réticulée (B) a été préalablement préparée par la mise en oeuvre d'au moins un polymère du propylène (PB), au moins un copolymère EVA, ainsi que de 100 à 1500 ppm en poids d'au moins un agent de réticulation.

5. Procédé selon l'une des revendications précédentes, dans laquelle la teneur pondérale du copolymère EVA de la composition réticulée (B) en acétate de vinyle est de 12 à 40 % en poids.

6. Procédé selon la revendication 4, dans laquelle l'agent de réticulation est essentiellement constitué d'au moins un peroxyde organique.

7. Procédé selon l'une des revendications précédentes, dans laquelle la composition non-réticulée (A) comprend au moins une polyoléfine (PA) et au moins un copolymère EVA.

8. Feuille de mousse fabriquée à partir d'une composition selon l'une des revendications 1 à 7.


**Patentansprüche**

1. Verfahren zur Herstellung eines Gegenstands in Form eines Schaumstoffs aus einer Zusammensetzung, die in Gewicht umfasst:

   - 40 bis 80% wenigstens einer nicht vernetzten Zusammensetzung (A), die wenigstens ein Polyolefin (PA) umfasst;
   - 60 bis 20% wenigstens einer vernetzten Zusammensetzung (B), die wenigstens ein Propylenpolymer (PB) und wenigstens ein Ethylen-Vinylacetat-Copolymer (EVA) umfasst;

   und bei dem:

   - man das Gemisch der Zusammensetzungen A und B unter Druck schmelzen lässt,
   - man dazu wenigstens ein Gas unter Druck einspritzt,
   - man das Gemisch A/B, das das Gas enthält, unter Bedingungen extrudiert, die geeignet sind, die Expansion des extrudierten Gemischs zu bewirken.

2. Verfahren gemäß Anspruch 1, bei dem die vernetzte Zusammensetzung (B) (in Gewicht) 10 bis 49% wenigstens eines Propylenpolymers und 90 bis 51 Gew.-% wenigstens eines Ethylen-Vinylacetat-Copolymers umfasst.

3. Verfahren gemäß einem der vorherigen Ansprüche, bei dem das in der vernetzten Zusammensetzung (B) verwendete Propylenpolymer (PB) einen Schmelzindex (MFI) kleiner als 4 g/10 min (230 °C; 2,16 kg; gemessen gemäß der Norm ISO 1133 - Version von 1991) aufweist.

4. Verfahren gemäß einem der vorherigen Ansprüche, bei dem die vernetzte Zusammensetzung (B) durch die Verwendung wenigstens eines Propylenpolymers (PB), wenigstens eines EVA-Copolymers sowie von 100 bis 1500 Gew.-ppm wenigstens eines Vernetzungsmittels vorab hergestellt wurde.

5. Verfahren gemäß einem der vorherigen Ansprüche, bei dem der Gewichtsgehalt des EVA-Copolymers der vernetzten Zusammensetzung (B) an Vinylacetat 12 bis 40 Gew.-% beträgt.

6. Verfahren gemäß Anspruch 4, bei dem das Vernetzungsmittel im Wesentlichen aus wenigstens einem organischen Peroxid besteht.

7. Verfahren gemäß einem der vorherigen Ansprüche, bei dem die nicht vernetzte Zusammensetzung (A) wenigstens ein Polyolefin (PA) und wenigstens ein EVA-Copolymer umfasst.

8. Schaumstofffolie, die aus einer Zusammensetzung gemäß einem der Ansprüche 1 bis 7 hergestellt wird.


**Claims**

1. Process for the manufacture of an article in the form of a foam from a composition including, by weight:

   - from 40 to 80 % of at least one uncrosslinked composition (A) including at least one polyolefin (PA);
   - from 60 to 20 % of at least one crosslinked composition (B) including at least one propylene polymer (PB) and at least one ethylene-vinyl acetate (EVA) copolymer;

   and in which:

   - the mixture of the compositions A and B is melted while being kept under pressure,
   - at least one gas under pressure is injected into it,
   - the mixture A/B containing the gas is extruded in conditions such as to cause the expansion of the extruded mixture.

2. Process according to Claim 1, in which the crosslinked composition (B) includes (by weight) from 10 to 49 % of at least one propylene polymer and from 90 to 51 % by weight of at least one ethylene-vinyl acetate copolymer.

3. Process according to either of the preceding claims, in which the propylene polymer (PB) employed in the crosslinked composition (B) exhibits a melt index (MFI) lower than 4 g/10 min (230°C; 2,16 kg; measured according to ISO 1133 - version of 1991).

4. Process according to one of the preceding claims, in which the crosslinked composition (B) has been prepared beforehand by processing at least one propylene polymer (PB), at least one EVA copolymer, and from 100 to 1500 ppm by weight of at least one crosslinking agent.

5. Process according to one of the preceding claims, in which the vinyl acetate weight content of the EVA copolymer of the crosslinked composition (B) is from 12 to 40 % by weight.

6. Process according to Claim 4, in which the crosslinking agent consists essentially of at least one organic peroxide.

7. Process according to one of the preceding claims, in which the uncrosslinked composition (A) includes at least one polyolefin (PA) and at least one EVA copolymer.

8. Foam sheet manufactured from a composition according to one of Claims 1 to 7.